# EUROPÄISCHE PATENTSCHRIFT

(11) **EP 1 017 750 B1**
(45) Veröffentlichungstag und Bekanntmachung des Hinweises auf die Patenterteilung: **09.04.2003**
(21) Anmeldenummer: 98951333.8
(22) Anmeldetag: 29.08.1998
(51) Int. Cl.: C09D 133/14, C09D 5/03, C09D 5/02

(54) **PULVERKLARLACK**
CLEAR POWDER COATING
VERNIS TRANSPARENT EN POUDRE

(30) Priorität: 20.09.1997 DE 19741555; 09.10.1997 DE 19744561; 17.07.1998 DE 19832106
(43) Veröffentlichungstag der Anmeldung: 12.07.2000
(73) Patentinhaber: BASF Coatings AG, 48165 Münster (DE)
(72) Erfinder: SCHWARTE, Stephan, D-48282 Emsdetten (DE); WOLTERING, Joachim, D-48159 Münster (DE); BAUMGART, Hubert, D-48163 Münster (DE)
(74) Vertreter: Fitzner, Uwe, Dr.
(86) Internationale Anmeldenummer: EP9805511
(87) Internationale Veröffentlichungsnummer: WO99015598

(56) Entgegenhaltungen:
- WO-A-97/08235

## Beschreibung

Die vorliegende Erfindung betrifft einen Pulverklarlack, der sich insbesondere als Überzug für mit Wasserbasislack beschichtete Automobilkarosserien eignet.

Für die Beschichtung von Automobilkarosserien werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere zeigen Pulverklarlacke noch Schwächen hinsichtlich der Chemikalienbeständigkeit und der Vergilbung. Epoxy/Carboxy vemetzte Pulverklarlacke zeigen eine deutlich schlechtere Anätzbeständigkeit gegenüber Wasser, Baumharz und Schwefelsäure.

Die vorliegende Erfindung hat sich nunmehr die Aufgabe gestellt, einen Pulverklarlack zur Verfügung zu stellen, wobei der Pulverlack eine gegenüber bisherigen Pulverklarlacken deutlich bessere Anätzbeständigkeit und eine reduzierte Vergilbungsneigung nach der Vernetzung aufweist. Der Pulverklarlack soll hierbei in fester Form der Applikation zugeführt werden können.

Diese Aufgabe wird gelöst durch einen Pulverklarlack enthaltend
a) wenigstens ein epoxidhaltiges Bindemittel mit einem Gehalt von 20 bis 45% an glycidylhaltigen Monomeren und ggf. einem Gehalt an vinylaromatischen Verbindungen, vorzugsweise Styrol,
b) Tris(alkoxycarbonylamino)Triazin und Polycarbonsäuren, vorzugsweise geradkettige, aliphatische Dicarbonsäuren und/oder carboxyfunktionelle Polyester als Vemetzungsmittel und
c) Ggf. Katalysatoren, Hilfsstoffe, pulverklarlacktypische Additive, wie Entgasungsmittel, Verlaufsmittel, UV-Absorber, Radikalfänger; Antioxidantien.

Vorzugsweise liegt der Gehalt an glycidylhaltigen Monemeren bei 25 bis 45%. Besonders bevorzugt sind 30 bis 45 Gew%, insbesondere 30 bis 45%. Ganz besonders bevorzugt sind 30 bis 35%. Höchst bevorzugt sind 26 bis 35%, insbesondere 27 bis 33%.

Bevorzugt werden hierbei folgende Mengenverhältnisse:
a) 60 - 80 Teile
b) 15 - 30 Teile
c) 3-10 Teile

Als epoxifunktionelles Bindemittel für den festen Pulverklarlack sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z. B. bekannt aus EP-A-299 420, DE-B-22 14 650, DE-B-27 49 576, US-A-4,091,048 und US-A-3,781,379.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiel für ethylenisch ungesättigte Monomere, die keine Epoxidgruppen im Molekül enthalten, sind Säureamide, wie z. B. Acrylsäure- und Methacrylsäureamid, vinylaromatische Verbindungen, wie Styrol, Methylstyrol und Vinyltolul, Nitrile, wie Acrylnitril und Methacrylnitril, Vinyl- und Vinylidenhalogenide, wie Vinylchlorid und Vinylidenfluorid, Vinylester, wie z. B. Vinylacetat und hydroxylgruppenhaltige Monomere, wie z. B. Hydroxyethylacrylat und Hydroxyethylmethacrylat.

Die in den epoxidfunktionellen Bindemitteln eingesetzten epoxidfunktionellen Monomere sind vorzugsweise Glycidylacrylat, Glycidylmethacrylat und Allyglycidylether.

Das epoxidgruppenhaltige Polyacrylatharz weist üblicherweise ein Epoxidäquivalentgewicht von 300 bis 2500, vorzugsweise 420 bis 700, ein zahlenmittleres Molekulargewicht (gelpermeationschromatographisch unter Verwendung eines Polystyrolstandards bestimmt) von 2000 bis 20000, vorzugsweise von 3000 bis 10000, und eine Glasübergangstemperatur (TG) von 30 bis 80, vorzugsweise von 40 bis 70, besonders bevorzugt von 40 bis 60°C (gemessen mit Hilfe der Differential Scanning Calorimetrie (DSC)). Ganz besonders bevorzugt werden ca. 50°C. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Als Komponente (b) werden Tris(Alkoxycarbonylamino)Triazine gemäß der US-PS 4,939,213, der US-PS 5,084,541 und EP 0 624 577 eingesetzt. Solche Verbindungen sind auch aus der DE 25 09 561 sowie Patent Abstracts of Japan, Publ.-Nr. 09194769 A bekannt. Allerdings werden die Tris(Alkoxycarbonylamino)Triazine dort nur für kationische Elektrotauchlacke eingesetzt.

Erfindungsgemäß handelt es sich um Tris(Alkoxycarbonylamino)Triazine der Formel 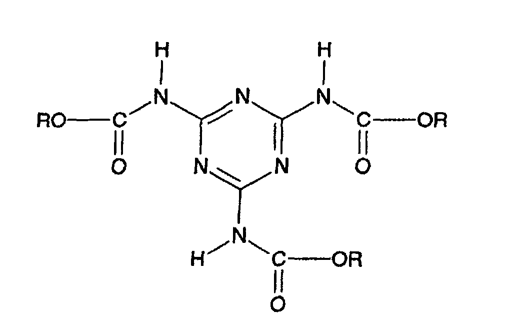 wobei R=Methyl, Butyl-,Ethylhexyl-Gruppen bedeuten. Ebenso können Derivate der genannten Verbindungen zum Einsatz kommen.

Erfindungsgemäß bevorzugt sind die Methyl-, Butyl-Mischester. Diese haben gegenüber reinen Methylestern den Vorzug der besseren Löslichkeit, in Polymerschmelzen und Butyl-Ethylhexyl-Mischester. Bevorzugt sind erfindungsgemäß auch die reinen Butylester.

Die Tris(Alkoxycarbonylamino)Triazine und deren Derivate können erfindungsgemäß auch im Gemisch mit herkömmlichen Vernetzungsmitteln eingesetzt werden (Komponente C). Hier kommen insbesondere von den Tris(Alkoxycarbonylamino)Triazinen verschiedene blockierte Polyisocyanate in Betracht. Ebenso sind Aminoplastharze z. B. Melamine, einsetzbar. Die Tris(Alkoxycarbonylamino)Triziane können in Mengen von 0,5 bis 15, vorzugsweise 1 bis 10, bevorzugt 2 bis 10 Gew.% vorliegen.
Im Prinzip kann jedes für transparente Decklacke geeignete Aminoplastharz oder eine Mischung aus solchen Aminoplastharzen eingesetzt werden. Die Tris(Alkoxycarbonylamino)Triazine können in Mengen von 1 bis 10, vorzugsweise 2 bis 10 Gew.-% vorliegen.

Derartige Harze sind dem Fachmann gut bekannt und werden von vielen Firmen als Verkaufsprodukte angeboten. Aminoplastharze sind Kondensationsprodukte aus Aldehyden, besonders Formaldehyd und beispielsweise Harnstoff, Melamin, Guanamim und Benzoguanamin. Die Aminoplastharze enthalten Alkohol-, vorzugsweise Methylolgruppen, die in der Regel teilweise oder vollständig mit Alkoholen verethert sind.

Als weitere Vemetzer sind Carbonsäuren, insbesondere gesättigte, geradkettige, aliphatische Dicarbonsäuren mit 3 bis 20 C-Atomen im Molekül geeignet. Ganz besonders bevorzugt wird Dodecan-1,12-disäure eingesetzt Zur Modifizierung der Eigenschaften der fertigen Pulverklarlacke können ggf. noch andere Carboxylgruppen enthaltende Vernetzer eingesetzt werden. Als Beispiele hierfür seien gesättigte verzweigte oder ungesättigte geradkettige Di- und Polycarbonsäuren sowie Polymere mit Carboxylgruppen genannt.

Ferner sind auch Pulverklarlacke geeignet, die einen epoxifunktionellen Vernetzer und ein säurefunktionelles Bindemittel enthalten.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der carboxylgruppenhaltige Vemetzer und das Carboxyl- bzw. das Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Das Bindemittel kann vinylaromatische Verbindungen, insbesondere Styrol enthalten. Um die Gefahr der Rißbildung bei der Bewitterung zu begrenzen, liegt der Gehalt jedoch nicht über 35 Gew.-%. Bevorzugt werden 10 bis 25 Gew.-%.

Die festen Pulverlacke enthalten ggf.einen oder mehrere geeignete Katalysatoren für die Epoxidharz-Aushärtung. Geeignete Katalysatoren sind Phosphoniumsalze organischer oder anorganischer Säuren, quarternäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vemetzungsmittels, eingesetzt

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium-Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Außerdem können die festen Pulverlacke ggf. noch Hilfsmittel und Additive enthalten. Beispiele hierfür sind Verlaufsmittel, Antioxidantien, UV-Absorber, Radikalfänger, Rieselhilfen und Entgasungsmittel, wie beispielsweise Benzoin.

Die Herstellung der festen Pulverlacke erfolgt nach bekannten Methoden (vgl. z,.B. Produkt-Information der Firma BASF Lacke + Farben AG, "Pulveriacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben für die Dispergierung vorbereitet.

Die mittlere Korngröße der erfindungsgemäßen Pulverlacke liegt zwischen 1 und 25 µm, vorzugsweise unter 20 µm, besonders bevorzugt bei 2 bis 10 µm.

Der erfindungsgemäße Pulverklarlack kann in Form einer wäßrigen Dispersion vorliegen, die eine Komponente A in Form des festen Pulverlacks, und eine wäßrige Komponente B enthält.

Vorzugsweise ist er in einer Komponente B dispergiert, die eine wäßrige Dispersion ist, enthaltend
a) wenigstens einen nicht-ionischen Verdicker
b) ggf. Katalysatoren, Hilfsstoffe, Entschäumunasmittel, Netzmittel, Dispersionshilfsmittel, vorzugsweise carboxyfunktionelle Dispergiermittel, Antioxidantien, UV-Absorber, Radikalfänger, Biozide, geringe Mengen Lösemittel, Verlaufsmittel, Neutralisierungsmittel, vorzugsweise Amine und/oder Wasserrückhaltemittel.

Die wäßrige Dispersion des erfindungsgemäßen Pulverlacks kann einen pH-Wert zwischen 4,0 bis 7,0, vorzugsweise 5,5 und 6,5 haben.

Die Pulverlacke lassen sich mit den aus dem Stand der Technik bekannten Methoden aufbringen. Hierbei kommt auch ein Einsatz in Form von Klarlacken in Betracht. Außerdem kann der erfindungsgemäße Pulverlack zur Beschichtung von lackierten und nichtlackierten Automobilkarosserien aus Metallblech und/oder Kunststoff mittels elektrostatisch unterstützter Hochrotation oder pneumatischer Applikation verwendet werden.

Das Einbrennen kann bereits bei Temperaturen von 130 °C durchgeführt werden. Durchführbar ist das Einbrennen bei 130 bis 180 °C, vorzugsweise 135 bis 155 °C.

Es ist überraschend, daß mit dem erfindungsgemäß eingesetzten Vemetzer die Anätzbeständigkeit gegenüber Wasser, Baumharz und Schwefelsäure verbessert und die Vergilbungsneigung signifikant reduziert wird.

Im folgenden wird die Erfindung unter Bezugnahme auf die Beispiele näher beschrieben:
1. Herstellung des Acrylatharzes
21,1 Teile Xylol werden vorgelegt und auf 130°C erwärmt. Zu der Vorlage werden bei 130°C binnen 4 h über zwei getrennte Zulaufbehälter Initiator: 4,5 Teile TBPEH (tert.-Butylperethylhexanoat) gemischt mit 4,86 Teilen Xylol und Monomere: 10,78 Teile Methylmethacrylat, 25,5 Teile n-Butylmethacrylat, 17,39 Teile Styrol und 23,95 Teile Glycidylmethacrylat zudosiert. Anschließend wird auf 180°C erwärmt und im Vakuum < 100 mbar das Lösemittel abgezogen.
2. Herstellung des Pulverklarlacks
Vergleichsbeispiel:
77,5 Teile Acrylatharz, 18,8 Teile Dodecandisäure, 2 Teile Tinuvin 1130 (UV-Absorber), 0,9 Teile Tinuvin 144 (HALS), 0,4 Teile Additol XL 490 (Verlaufsmittel) und 0,4 Teile Benzoin (Entgasungsmittel) werden innig auf einem Henschel-Fluidmischer vermischt, auf einem BUSS PLK 46 Extruder extrudiert, auf einer Hosohawa ACM 2-Mühle vermahlen und über ein 125 µm Sieb abgesiebt.
3. Beispiel 1:
73,5 Teile Acrylharz, 17,8 Teile Dodecandisäure, 5,0 Teile Tris(Alkoxycarbonylamino)Triazin, 2 Teile Tinuvin 1130 (UV-Absorber), 0,9 Teile Tinuvin 144 (HALS), 0,4 Teile Additol XL 490 (Verlaufsmittel) und 0,4 Teile Benzoin (Entgasungsmittel) werden innig auf einem Henschel-Fluidmischer vermischt, auf einem BUSS PLK 46 Extruder extrudiert, auf einer Hosokawa ACM 2-Mühle vermahlen und über ein 125 µm Sieb abgesiebt.
4. Applikation des Pulverklarlackes
Der Pulverklarlack wird auf mit handelsüblichen Elektrotauchlack und schwarzem Wasserbasislack beschichteten Stahltafeln mittels elektrostatischer Spritzpistole appliziert. Die Bleche werden anschließend bei einer Temperatur von 140 °C 30 min. eingebrannt.
5. Prüfung der Chemikalienbeständigkeit der Pulverklarlacke
Auf den Prüftafeln wird Baumharz (0,025 ml) und 1 %-ige H₂SO₄ (0,025 ml) aufgetragen und anschließend werden die Tafeln auf einen Gradientenofen (Fa. Byk) 30 min. belastet. Es wird die Temperatur ermittelt, bei der eine erste Schädigung auftritt.

| | Baumharz | H₂SO₄ |
|---|---|---|
| Vergleich | 37 °C | 47 °C |
| Beispiel | 53 °C | 51 °C |

## Patentansprüche

1. Pulverklarlack enthaltend
a) wenigstens ein epoxidhaltiges Bindemittel mit einem Gehalt an glycidylhaltigen Monomeren von 20 bis 45 Gew.-% ggf. mit einem Gehalt an vinylaromatischen Verbindungen, vorzugsweise Styrol,
b) Tris(alkoxycarbonylamino)Triazin und Polycarbonsäuren,vorzugsweise geradkettige, aliphatische Dicarbonsäuren und/oder carboxyfunktionelle Polyester als Vernetzungsmittel und
c) ggf. Katalysatoren, Hilfsstoffe, pulverklarlacktypische Additive wie Entgasungsmittel,Verlaufsmittel,UV-Absorber, Radikalfänger, Antioxidantien.

2. Pulverklarlack nach Anspruch 1,
**dadurch gekennzeichnet, daß** der Gehalt an glycidylhaltigen Monomeren vorzugsweise 25 bis 45 Gew.-% beträgt.

3. Pulverlack nach Anspruch 1 **dadurch gekennzeichnet, daß.** der Gehalt an glycidylhaltigen Monomeren bei 30 bis 45 Gew.-% liegt.

4. Pulverlack nach Anspruch 1 **dadurch gekennzeichnet, daß** der Gehalt an glycidylhaltigen Monomeren bei 30 bis 35 Gew.-% liegt.

5. Pulverlack nach einem der Ansprüche 1 oder 2 **dadurch gekennzeichnet, daß** er 0,5 bis 15 Gew.-%, vorzugsweise 1 bis 10 Gew.-% Tris(alkoxycarbonylamino)Triazin enthält.

6. Pulverklarlack nach einem der Ansprüche 1 bis 5,
**dadurch gekennzeichnet, daß** der Gehalt an vinylaromatischen Verbindungen höchstens 35, vorzugsweise 10 bis 25 Gew.-% beträgt, bezogen auf Komponente a).

7. Pulverklarlack nach einem der Ansprüche 1 bis 6,
**dadurch gekennzeichnet, daß** die epoxidfunktionellen Bindemittel epoxidgruppenhaltige Polyacrylatharze sind, wobei die eingesetzten epoxidfunktionellen Monomere vorzugsweise Glycidylacrylat, Glycidylmethacrylat und Allylglycidylether sind.

8. Pulverklarlack nach einem der Ansprüche 1 bis 7,
**dadurch gekennzeichnet, daß** er in Form einer wäßrigen Dispersion vorliegt, die eine Komponente A in Form des festen Pulverlacks, und eine wäßrige Komponente B enthält..

9. Pulverklarlack nach Anspruch 8, **dadurch gekennzeichnet, daß** er in einer Komponente B dispergiert ist, die eine wäßrige Dispersion ist, enthaltend
c) wenigstens einen nicht-ionischen Verdicker
d) ggf. Katalysatoren, Hilfsstoffe, Entschäumungsmittel, Netzmittel, Dispersionshilfsmittel, vorzugsweise carboxyfunktionelle Dispergiermittel, Antioxidantien, UV-Absorber, Radikalfänger, Biozide, geringe Mengen Lösemittel, Verlaufsmittel, Neutralisierungsmittel, vorzugsweise Amine und/oder Wasserrückhaltemittel.

10. Pulverklarlack nach einem der Ansprüche 1 bis 9,
**dadurch gekennzeichnet, daß** er als wäßrige Dispersion vorliegt, deren pH-Wert zwischen 4,0 bis 7,0, vorzugsweise 5,5 und 6,5 liegt.

11. Pulverklarlack nach einem der Ansprüche 1 bis 10,
**dadurch gekennzeichnet, daß** die Korngröße höchstens 20 µm, vorzugsweise 2 bis 10 µm ist.

12. Verwendung des Pulverlacks nach einem der Ansprüche 1 bis 11 zur Beschichtung von lackierten und nichtlackierten Automobilkarosserien aus Metallblech und/oder Kunststoff mittels elektrostatisch unterstützter Hochrotation oder pneumatischer Applikation.

## Claims

1. Transparent powder coating material comprising
a) at least one epoxy-containing binder with a content of from 20 to 45% by weight of glycidyl-containing monomers and with or without a content of vinylaromatic compounds, preferably styrene,
b) tris(alkoxycarbonylamino)triazine and polycarboxylic acids, preferably straight-chain aliphatic dicarboxylic acids and/or carboxy-functional polyesters, as crosslinking agents, and
c) if desired, catalysts, auxiliaries, additives typical for transparent powder coating materials, such as degassing agents, levelling agents, UV absorbers, free-radical scavengers, antioxidants.

2. Transparent powder coating material according to Claim 1, **characterized in that** the content of glycidyl-containing monomers is preferably from 25 to 45% by weight.

3. Powder coating material according to Claim 1, **characterized in that** the content of glycidyl-containing monomers lies from 30 to 45% by weight.

4. Powder coating material according to Claim 1, **characterized in that** the content of glycidyl-containing monomers lies from 30 to 35% by weight.

5. Powder coating material according to one of Claims 1 and 2, **characterized in that** it comprises 0.5-15% by weight, preferably from 1 to 10% by weight, of tris(alkoxycarbonylamino)triazine.

6. Transparent powder coating material according to one of Claims 1 to 5, **characterized in that** the content of vinylaromatic compounds is not more than 35, preferably from 10 to 25% by weight, based on component a).

7. Transparent powder coating material according to one of Claims 1 to 6, **characterized in that** the epoxy-functional binders are epoxy-functional polyacrylate resins, the epoxy-functional monomers employed preferably being glycidyl acrylate, glycidyl methacrylate and allyl glycidyl ether.

8. Transparent powder coating material according to one of Claims 1 to 7, **characterized in that** it is in the form of an aqueous dispersion which comprises a component A in the form of a solid powder coating and an aqueous component B.

9. Transparent powder coating material according to Claim 8, **characterized in that** it is dispersed in a component B which is an aqueous dispersion comprising
c) at least one nonionic thickener
d) if desired, catalysts, auxiliaries, defoamers, wetting agents, dispersing auxiliaries, preferably carboxy-functional dispersants, antioxidants, UV absorbers, free-radical scavengers, biocides, small amounts of solvent, levelling agents, neutralizing agents, preferably amines, and/or water retention agents.

10. Transparent powder coating material according to one of Claims 1 to 9, **characterized in that** it is present as an aqueous dispersion whose pH lies between 4.0 and 7.0, preferably 5.5 and 6.5.

11. Transparent powder coating material according to one of Claims 1 to 10, **characterized in that** the particle size is not more than 20 µm, preferably from 2 to 10 µm.

12. Use of the transparent powder coating material according to one of Claims 1 to 11 for coating uncoated and coated car bodies made from metal sheet and/or plastic by means of electrostatically assisted high-speed rotation or pneumatic application.

## Revendications

1. Vernis transparent pulvérulent contenant
a) au moins un liant contenant de l'époxyde avec une teneur en monomères contenant du glycidyle de 20 à 45 % en poids, le cas échéant avec une teneur en composés vinylaromatiques, de préférence du styrène,
b) du tris(alcoxycarbonylamino)triazine et des acides polycarboxyliques, de préférence des acides dicarboxyliques aliphatiques à chaîne linéaire et/ou des polyesters à fonction carboxy comme agents réticulants et
c) le cas échéant, des catalyseurs, des substances auxiliaires, des additifs typiques des vernis transparents pulvérulents comme des agents dégazants, des agents d'égalisation, des absorbeurs d'UV, des capteurs de radicaux, des antioxydants.

2. Vernis transparent pulvérulent selon la revendication 1, **caractérisé en ce que** la teneur en monomères contenant du glycidyle est de préférence de 25 à 45 % en poids.

3. Vernis pulvérulent selon la revendication 1, **caractérisé en ce que** la teneur en monomères contenant du glycidyle est de 30 à 45 % en poids.

4. Vernis pulvérulent selon la revendication 1, **caractérisé en ce que** la teneur en monomères contenant du glycidyle est de 30 à 35 % en poids.

5. Vernis pulvérulent selon la revendication 1 ou 2, **caractérisé en ce qu'**il contient de 0,5 à 15 % en poids, de préférence 1 à 10 % en poids, de tris(alcoxycarbonylamino)triazine.

6. Vernis transparent pulvérulent selon une des revendications 1 à 5, **caractérisé en ce que** la teneur en composés vinylaromatiques est au maximum de 35, de préférence 10 à 25 % en poids, par rapport au composé a).

7. Vernis transparent pulvérulent selon une des revendications 1 à 6, **caractérisé en ce que** les liants à fonction époxy sont des résines polyacrylates contenant des groupes époxydes, les monomères à fonction époxy utilisés étant de préférence du glycidyleacrylate, du glycidyleméthacrylate et de l'allylglycidyleéther.

8. Vernis transparent pulvérulent selon une des revendications 1 à 7, **caractérisé en ce qu'**il est présent sous forme d'une dispersion aqueuse, qui contient un composé A sous forme du vernis pulvérulent solide et un composé aqueux B.

9. Vernis transparent pulvérulent selon la revendication 8, **caractérisé en ce qu'**il est dispersé dans un composé B qui est une dispersion aqueuse contenant
c) au moins un épaississant non ionique,
d) le cas échéant des catalyseurs, des substances auxiliaires, des agents antimousse, des agents réticulants, des auxiliaires de dispersion, de préférence des agents de dispersion à fonction carboxy, des antioxydants, des absorbeurs d'UV, des capteurs de radicaux, des biocides, de faibles quantités de solvants, des agents d'égalisation, des agents de neutralisation, de préférence des amines et/ou des agents de rétention d'eau.

10. Vernis transparent pulvérulent selon une des revendications 1 à 9, **caractérisé en ce qu'**il se présente sous forme d'une dispersion aqueuse dont la valeur de pH se situe entre 4,0 et 7,0, de préférence entre 5,5 et 6,5.

11. Vernis transparent pulvérulent selon une des revendications 1 à 10, **caractérisé en ce que** la taille des grains est au maximum de 20 µm, au maximum de 2 à 10 µm.

12. Utilisation du vernis pulvérulent selon une des revendications 1 à 11 pour le revêtement de carrosseries automobiles vernies et non vernies en tôle métallique et/ou en matière plastique au moyen d'une rotation à haute vitesse assistée par électrostatique ou d'une application pneumatique.
